# EUROPEAN PATENT APPLICATION

(11) **EP 4 458 899 A1**
(43) Date of publication of application: **06.11.2024**
(21) Application number: 22915832.4
(22) Date of filing: 20.12.2022
(51) Int. Cl.: C08L 27/06, B32B 5/18, B32B 27/22, B32B 27/30, C08L 67/02

(54) **VINYL CHLORIDE RESIN COMPOSITION, MOLDED VINYL CHLORIDE RESIN OBJECT, AND LAMINATE**

(30) Priority: 27.12.2021 JP 2021213393
(71) Applicant: Zeon Corporation, Tokyo 100-8246 (JP)
(72) Inventor: FUJIWARA, Takanori, Tokyo 100-8246 (JP); ABE, Koudai, Tokyo 100-8246 (JP)
(74) Representative: Maiwald GmbH
(86) International application number: PCT/JP2022/046961
(87) International publication number: WO 2023/127608

(57) **Abstract**

Provided is a vinyl chloride resin composition having excellent meltability. The vinyl chloride resin composition contains a vinyl chloride resin and a plasticizer, wherein the content of the plasticizer is more than 70 parts by mass relative to 100 parts by mass of the vinyl chloride resin, the plasticizer includes a polyester that includes adipic acid-derived structural units and polyhydric alcohol-derived structural units, and the polyhydric alcohol-derived structural units include more than 70 mol% of 2-methyl-1,3-propanediol-derived structural units.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing molding by a known molding method such as powder slush molding with respect to a vinyl chloride resin composition that contains a vinyl chloride resin, a plasticizer, and additives such as a pigment (for example, refer to Patent Literature (PTL) 1).

As one specific example, a surface skin formed of a vinyl chloride resin molded product is produced in PTL 1 through powder molding of a vinyl chloride resin composition that contains a vinyl chloride resin, a plasticizer, and additives such as a hydrotalcite stabilizer, a zeolite stabilizer, and a β-diketone. Moreover, in PTL 1, a trimellitic acid ester and a polyester that includes an adipic acid-derived structural unit and a 3-methyl-1,5-pentanediol-derived structural unit are used together as the plasticizer that is contained in the vinyl chloride resin composition.

### CITATION LIST

### Patent Literature

PTL 1: WO2020/090556A1

### SUMMARY

### (Technical Problem)

It is desirable for a vinyl chloride resin composition to have excellent meltability from a viewpoint of facilitating molding of the vinyl chloride resin composition and increasing surface smoothness of a vinyl chloride resin molded product obtained through molding.

However, the vinyl chloride resin composition of the conventional technique described above leaves room for improvement in terms of meltability.

Accordingly, one object of the present disclosure is to provide a vinyl chloride resin composition having excellent meltability.

Another object of the present disclosure is to provide a vinyl chloride resin molded product formed using this vinyl chloride resin composition.

Yet another object of the present disclosure is to provide a laminate including this vinyl chloride resin molded product.

### (Solution to Problem)

The inventors conducted diligent investigation with the aim of solving the problem set forth above. The inventors discovered that by using a plasticizer that includes a specific polyester in a vinyl chloride resin composition and by setting the content of the plasticizer as more than a specific value, it is possible to cause the vinyl chloride resin composition to display excellent meltability. In this manner, the inventors completed the present disclosure.

Specifically, with the aim of advantageously solving the problem set forth above, [1] a presently disclosed vinyl chloride resin composition comprises a vinyl chloride resin and a plasticizer, wherein content of the plasticizer is more than 70 parts by mass relative to 100 parts by mass of the vinyl chloride resin, the plasticizer includes a polyester that includes adipic acid-derived structural units and polyhydric alcohol-derived structural units, and the polyhydric alcohol-derived structural units include more than 70 mol% of 2-methyl-1,3-propanediol-derived structural units.

In the case of a vinyl chloride resin composition that contains a vinyl chloride resin and a plasticizer including the specific polyester set forth above and in which the content of the plasticizer is more than the specific value set forth above in this manner, the vinyl chloride resin composition can display excellent meltability.

[2] In the vinyl chloride resin composition according to the foregoing [1], content of the polyester is preferably more than 30 parts by mass and not more than 200 parts by mass relative to 100 parts by mass of the vinyl chloride resin.

When the content of the polyester is within the specific range set forth above in this manner, meltability of the vinyl chloride resin composition can be further improved, and powder fluidity of the vinyl chloride resin composition and light resistance of a formed vinyl chloride resin molded product can also be improved.

[3] In the vinyl chloride resin composition according to the foregoing [1] or [2], proportional content of the polyester in the plasticizer is preferably 50 mass% or more.

When the proportional content of the polyester in the plasticizer is within the specific range set forth above, meltability of the vinyl chloride resin composition can be further improved, and powder fluidity of the vinyl chloride resin composition and light resistance of a formed vinyl chloride resin molded product can also be improved.

[4] The vinyl chloride resin composition according to any one of the foregoing [1] to [3] is preferably used in powder molding.

By using the vinyl chloride resin composition in powder slush molding, it is easy to obtain a vinyl chloride resin molded product that can be used well as an automobile interior material such as a surface skin for an automobile instrument panel, for example.

[5] The vinyl chloride resin composition according to any one of the foregoing [1] to [4] is preferably used in powder slush molding.

By using the vinyl chloride resin composition in powder slush molding, it is even easier to obtain a vinyl chloride resin molded product that can be used well as an automobile interior material such as a surface skin for an automobile instrument panel, for example.

Moreover, with the aim of advantageously solving the problem set forth above, [6] a presently disclosed vinyl chloride resin molded product is obtained through molding of the vinyl chloride resin composition according to any one of the foregoing [1] to [5].

A vinyl chloride resin molded product that is obtained through molding of the vinyl chloride resin composition set forth above in this manner has excellent surface smoothness.

[7] The vinyl chloride resin molded product according to the foregoing [6] is preferably for a surface skin of an automobile instrument panel.

By using the presently disclosed vinyl chloride resin molded product as a surface skin of an automobile instrument panel in this manner, it is possible to improve surface smoothness of a surface skin of a produced automobile instrument panel.

Furthermore, with the aim of advantageously solving the problem set forth above, [8] a presently disclosed laminate comprises: a foamed polyurethane molded product; and the vinyl chloride resin molded product according to the foregoing [6] or [7].

A laminate that includes a foamed polyurethane molded product and the vinyl chloride resin molded product set forth above has a vinyl chloride resin molded product part with excellent surface smoothness.

[9] The laminate according to the foregoing [8] is preferably for an automobile instrument panel.

By using the laminate as an automobile instrument panel in this manner, it is possible to improve surface smoothness of a surface skin of a produced automobile instrument panel.

### (Advantageous Effect)

According to the present disclosure, it is possible to provide a vinyl chloride resin composition having excellent meltability.

Moreover, according to the present disclosure, it is possible to provide a vinyl chloride resin molded product formed using this vinyl chloride resin composition.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

The presently disclosed vinyl chloride resin composition contains: (a) a vinyl chloride resin; and (b) a plasticizer. The content of the (b) plasticizer in the presently disclosed vinyl chloride resin composition is more than a specific value.

Moreover, the presently disclosed vinyl chloride resin composition contains, as the (b) plasticizer, (b 1) a polyester that includes adipic acid-derived structural units and polyhydric alcohol-derived structural units (hereinafter, also referred to simply as the "(b 1) polyester"). Furthermore, the proportional content of 2-methyl-1,3-propanediol-derived structural units among the total amount of polyhydric alcohol-derived structural units included in the (b 1) polyester is more than a specific value.

Note that the presently disclosed vinyl chloride resin composition may optionally further contain other components besides the (a) vinyl chloride resin and the (b) plasticizer.

Moreover, the presently disclosed vinyl chloride resin composition may optionally further contain a plasticizer other than the (b 1) polyester as the (b) plasticizer.

The presently disclosed vinyl chloride resin composition has excellent meltability.

Consequently, by using the presently disclosed vinyl chloride resin composition, it is possible to obtain a vinyl chloride resin molded product that is suitable as an automobile interior material, such as a surface skin for an automobile instrument panel or a surface skin for a door trim, having excellent surface smoothness, for example.

Note that from a viewpoint of easily obtaining a vinyl chloride resin molded product that can be used well as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### «Vinyl chloride resin particles»

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. When the average degree of polymerization of the vinyl chloride resin forming the vinyl chloride resin particles is not less than any of the lower limits set forth above, sufficiently high physical strength of a vinyl chloride resin molded product formed using the vinyl chloride resin composition can be ensured while also improving tensile characteristics (particularly tensile elongation) of the vinyl chloride resin molded product, for example. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. On the other hand, when the average degree of polymerization of the vinyl chloride resin forming the vinyl chloride resin particles is not more than any of the upper limits set forth above, meltability of the vinyl chloride resin composition can be further improved.

Moreover, the average degree of polymerization of the vinyl chloride resin forming the vinyl chloride resin particles may be 1,300 or more, may be 1,400 or more, may be 1,500 or more, may be 1,600 or more, may be 1,700 or more, may be 1,700 or less, may be 1,600 or less, may be 1,500 or less, may be 1,400 or less, or may be 1,300 or less.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, more preferably 100 µm or more, and even more preferably 125 µm or more, and is preferably 500 µm or less, more preferably 200 µm or less, and even more preferably 135 µm or less. When the average particle diameter of the vinyl chloride resin particles is not less than any of the lower limits set forth above, powder fluidity of the vinyl chloride resin composition can be improved. On the other hand, when the average particle diameter of the vinyl chloride resin particles is not more than any of the upper limits set forth above, meltability of the vinyl chloride resin composition can be further improved, and surface smoothness of a vinyl chloride resin molded product formed using the vinyl chloride resin composition can be further increased.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be 100 mass%, and is preferably 95 mass% or less, and more preferably 90 mass% or less. When the proportional content of the vinyl chloride resin particles in the (a) vinyl chloride resin is not less than any of the lower limits set forth above, sufficiently high physical strength of a vinyl chloride resin molded product formed using the vinyl chloride resin composition can be ensured while also improving tensile elongation of the vinyl chloride resin molded product. On the other hand, when the proportional content of the vinyl chloride resin particles in the (a) vinyl chloride resin is not more than any of the upper limits set forth above, powder fluidity of the vinyl chloride resin composition can be improved.

### «Vinyl chloride resin fine particles»

In the vinyl chloride resin composition, the vinyl chloride resin fine particles normally function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles that serve as a dusting agent is not less than any of the lower limits set forth above, powder fluidity of the vinyl chloride resin composition can be improved, and tensile elongation of a vinyl chloride resin molded product formed using the vinyl chloride resin composition can also be improved. On the other hand, when the average degree of polymerization of the vinyl chloride resin forming the vinyl chloride resin fine particles is not more than any of the upper limits set forth above, meltability of the vinyl chloride resin composition can be further improved, and surface smoothness of a vinyl chloride resin molded product formed using the vinyl chloride resin composition can be further increased.

Note that the average degree of polymerization of the vinyl chloride resin forming the vinyl chloride resin fine particles may be 800 or more, or may be 800 or less.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. When the average particle diameter of the vinyl chloride resin fine particles is not less than any of the lower limits set forth above, the vinyl chloride resin fine particles are not too small to function as a dusting agent, for example, and powder fluidity of the vinyl chloride resin composition can be improved. On the other hand, when the average particle diameter of the vinyl chloride resin fine particles is not more than any of the upper limits set forth above, meltability of the vinyl chloride resin composition can be improved, and surface smoothness of a formed vinyl chloride resin molded product can be increased.

Note that the average particle diameter of the vinyl chloride resin fine particles may be 1.8 µm or more, or may be 1.8 µm or less.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. When the proportional content of the vinyl chloride resin fine particles in the (a) vinyl chloride resin is not less than any of the lower limits set forth above, powder fluidity of the vinyl chloride resin composition can be improved. On the other hand, when the proportional content of the vinyl chloride resin fine particles in the (a) vinyl chloride resin is not more than any of the upper limits set forth above, physical strength of a vinyl chloride resin molded product formed using the vinyl chloride resin composition can be increased.

### <(b) Plasticizer>

The (b) plasticizer is a component that can impart flexibility to a vinyl chloride resin molded product formed using the vinyl chloride resin composition. Moreover, by using the (b) plasticizer in the vinyl chloride resin composition, it is possible to increase meltability of the vinyl chloride resin composition, which makes it easy to mold (particularly powder mold) the vinyl chloride resin composition into the form of a vinyl chloride resin molded product and can increase surface smoothness of a formed vinyl chloride resin molded product.

The content of the (b) plasticizer in the vinyl chloride resin composition is required to be more than 70 parts by mass relative to 100 parts by mass of the vinyl chloride resin, is preferably 75 parts by mass or more, more preferably 80 parts by mass or more, even more preferably 85 parts by mass or more, and further preferably 90 parts by mass or more relative to 100 parts by mass of the vinyl chloride resin composition, and is preferably 240 parts by mass or less, more preferably 185 parts by mass or less, even more preferably 120 parts by mass or less, further preferably 110 parts by mass or less, and even further preferably 100 parts by mass or less relative to 100 parts by mass of the vinyl chloride resin composition. When the content of the plasticizer in the vinyl chloride resin composition is more than 70 parts by mass relative to 100 parts by mass of the vinyl chloride resin, meltability of the vinyl chloride resin composition can be sufficiently increased, and sufficient flexibility can be imparted to a formed vinyl chloride resin molded product. Moreover, when the content of the plasticizer in the vinyl chloride resin composition is not less than any of the lower limits set forth above, meltability of the vinyl chloride resin composition can be further improved, and powder fluidity of the vinyl chloride resin composition can also be improved. On the other hand, when the content of the plasticizer in the vinyl chloride resin composition is not more than any of the upper limits set forth above, light resistance of a formed vinyl chloride resin molded product can be improved.

The (b) plasticizer is required to include (b1) a polyester and may optionally further include plasticizers other than the (b1) polyester (hereinafter, referred to as "(b2) other plasticizers").

### <<(b1) Polyester>>

The (b1) polyester includes adipic acid-derived structural units and polyhydric alcohol-derived structural units.

The presently disclosed vinyl chloride resin composition can display excellent meltability as a result of containing the (b1) polyester as the (b) plasticizer. Moreover, the (b1) polyester can improve powder fluidity of the vinyl chloride resin composition and can increase light resistance and heat shrinkage resistance of a formed vinyl chloride resin molded product.

The (b1) polyester is required to include 2-methyl-1,3-propanediol-derived structural units as the polyhydric alcohol-derived structural units and may optionally further include structural units derived from polyhydric alcohols other than 2-methyl-1,3-propanediol (hereinafter, also referred to as "other polyhydric alcohols").

The proportional content of 2-methyl-1,3-propanediol-derived structural units among the polyhydric alcohol-derived structural units when the total amount of polyhydric alcohol-derived structural units included in the (b1) polyester is taken to be 100 mol% is required to be more than 70 mol%, and is preferably 80 mol% or more, more preferably 90 mol% or more, and even more preferably 95 mol% or more. When the proportional content of 2-methyl-1,3-propanediol-derived structural units among the total amount of polyhydric alcohol-derived structural units included in the (b1) polyester is more than 70%, meltability and powder fluidity of the vinyl chloride resin composition can be sufficiently improved, and light resistance of a formed vinyl chloride resin molded product can be sufficiently increased.

Moreover, from a viewpoint of further improving meltability and powder fluidity of the vinyl chloride resin composition and light resistance of a formed vinyl chloride resin molded product, the proportional content of 2-methyl-1,3-propanediol-derived structural units among the polyhydric alcohol-derived structural units when the total amount of polyhydric alcohol-derived structural units included in the (b1) polyester is taken to be 100 mol% is particularly preferably 100 mol%. In other words, it is particularly preferable that the (b1) polyester only includes 2-methyl-1,3-propanediol-derived structural units as the polyhydric alcohol-derived structural units.

Examples of polyhydric alcohols other than 2-methyl-1,3-propanediol that can form structural units derived from other polyhydric alcohols in the (b1) polyester include 1,2-propylene glycol, 1,2-butanediol, 1,3-butanediol, 1,4-butanediol, 2,2-dimethyl-1,3-propanediol, and 3-methyl-1,5-pentanediol.

The proportional content of structural units derived from other polyhydric alcohols among the polyhydric alcohol-derived structural units when the total amount of polyhydric alcohol-derived structural units included in the (b1) polyester is taken to be 100 mol% is required to be less than 30 mol%, and is preferably 20 mol% or less, more preferably 10 mol% or less, and even more preferably 5 mol% or less. When the proportional content of structural units derived from other polyhydric alcohols among the total amount of polyhydric alcohol-derived structural units included in the (b1) polyester is less than 30 mol% or not more than any of the specific values set forth above, meltability and powder fluidity of the vinyl chloride resin composition can be further improved, and light resistance of a formed vinyl chloride resin molded product can be further increased.

Moreover, from a viewpoint of further improving meltability and powder fluidity of the vinyl chloride resin composition and light resistance of a formed vinyl chloride resin molded product, the proportional content of structural units derived from other polyhydric alcohols among the polyhydric alcohol-derived structural units when the total amount of polyhydric alcohol-derived structural units included in the (b1) polyester is taken to be 100 mol% is particularly preferably 0 mol%. In other words, it is particularly preferable that the (b1) polyester does not include structural units derived from polyhydric alcohols other than 2-methyl-1,3-propanediol as the polyhydric alcohol-derived structural units.

Note that although the (b1) polyester may include structural units derived from polybasic carboxylic acids other than adipic acid as polybasic carboxylic acid-derived structural units, the proportional content of adipic acid-derived structural units among the total amount of polybasic carboxylic acid-derived structural units in the (b1) polyester is preferably 50 mol% or more, more preferably 80 mol% or more, and particularly preferably 100 mol%. In other words, it is particularly preferable that the (b1) polyester only includes adipic acid-derived structural units as polybasic carboxylic acid-derived structural units.

### [Production method]

The (b1) polyester can be obtained through condensation polymerization of adipic acid and a polyhydric alcohol including more than 70 mol% of 2-methyl-1,3-propanediol without any specific limitations. This condensation polymerization can be performed in the presence of a catalyst. Moreover, the condensation polymerization can be performed using an alcohol and/or a monobasic acid as a terminal stopping component. The condensation polymerization of adipic acid and the polyhydric alcohol and the termination reaction of the obtained polycondensate and the terminal stopping component may be performed in one go or may be performed separately. A product that is obtained through the condensation polymerization and the termination reaction may be subjected to after-treatment such as distillation. Commonly known conditions can be adopted as reaction conditions of the condensation polymerization, such as the used amounts of the adipic acid and polyhydric alcohol as monomers, and also the catalyst and terminal stopping component.

Also note that a commercially available product may be used as the (b1) polyester.

The catalyst used in the condensation polymerization reaction is not specifically limited and may be dibutyltin oxide, tetraalkyl titanate, or the like, for example.

Examples of alcohols that can be used as the terminal stopping component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, undecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohol, and mixtures thereof.

Examples of monobasic acids that can be used as the terminal stopping component include acetic acid, propionic acid, butyric acid, isobutyric acid, valeric acid, pivalic acid, caproic acid, heptanoic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Of these examples, 2-ethylhexanol is preferable as the terminal stopping component.

### [Physical properties, etc.]

The weight-average molecular weight of the (b1) polyester is preferably 1,000 or more, more preferably 2,000 or more, and even more preferably 4,000 or more, and is preferably 10,000 or less, more preferably 7,000 or less, and even more preferably 5,500 or less.

Moreover, the weight-average molecular weight of the (b1) polyester may be 4,200 or more, or may be 4,200 or less.

Note that the "weight-average molecular weight" can be determined as a polystyrene-equivalent value by gel permeation chromatography (GPC) with tetrahydrofuran as a solvent.

The acid value of the (b1) polyester is preferably not less than 0.5 mg KOH/g and not more than 2 mg KOH/g. The acid value of the (b1) polyester may be 1 mg KOH/g or more, or may be 1 mg KOH/g or less.

The hydroxyl value of the (b1) polyester is preferably 30 mg KOH/g or less, more preferably 10 mg KOH/g or less, and even more preferably 7 mg KOH/g or less. The hydroxyl value of the (b 1) polyester may be 5.5 mg KOH/g or more, or may be 5.5 mg KOH/g or less.

Note that the "acid value" and "hydroxyl value" of a polyester referred to in the present specification can each be measured by a method in accordance with JIS K0070.

The viscosity of the (b1) polyester is preferably 500 mPa·s or more, and more preferably 1,000 mPa·s or more, and is preferably 8,000 mPa·s or less, more preferably 5,000 mPa·s or less, and even more preferably 3,000 mPa·s or less. The viscosity of the (b1) polyester may be 3,200 mPa·s or more, or may be 3,200 mPa·s or less.

Note that the "viscosity" can be measured in accordance with JIS Z8803 at a temperature of 23°C.

### [Content, etc.]

The content of the (b1) polyester in the vinyl chloride resin composition is preferably more than 30 parts by mass, more preferably 50 parts by mass or more, even more preferably 70 parts by mass or more, further preferably 80 parts by mass or more, and even further preferably 85 parts by mass or more relative to 100 parts by mass of the vinyl chloride resin, and is preferably 200 parts by mass or less, more preferably 150 parts by mass or less, even more preferably 115 parts by mass or less, further preferably 105 parts by mass or less, and even further preferably 95 parts by mass or less relative to 100 parts by mass of the vinyl chloride resin. When the content of the (b1) polyester in the vinyl chloride resin composition is more than or not less than any of the lower limits set forth above, meltability and powder fluidity of the vinyl chloride resin composition and light resistance and heat shrinkage resistance of a formed vinyl chloride resin molded product can be further improved. On the other hand, when the content of the (b1) polyester in the vinyl chloride resin composition is not more than any of the upper limits set forth above, light resistance of a formed vinyl chloride resin molded product can be further improved.

Moreover, the content of the (b1) polyester in the vinyl chloride resin composition may be 85 parts by mass or less, may be 80 parts by mass or less, or may be 70 parts by mass or less relative to 100 parts by mass of the (a) vinyl chloride resin.

The proportional content of the (b1) polyester in the (b) plasticizer is preferably 50 mass% or more, more preferably 65 mass% or more, even more preferably 90 mass% or more, further preferably 93 mass% or more, and even further preferably 95 mass% or more, can be 100 mass%, and is preferably 99 mass% or less, more preferably 98 mass% or less, even more preferably 97 mass% or less, and further preferably 95.8 mass% or less. When the content of the (b1) polyester in the (b) plasticizer is not less than any of the lower limits set forth above, meltability and powder fluidity of the vinyl chloride resin composition and light resistance and heat shrinkage resistance of a formed vinyl chloride resin molded product can be further improved. On the other hand, when the content of the (b1) polyester in the (b) plasticizer is not more than any of the upper limits set forth above, light resistance of a formed vinyl chloride resin molded product can be further improved.

Moreover, the proportional content of the (b1) polyester in the (b) plasticizer may be 85 mass% or less, or may be 75 mass% or less.

### <<(b2) Other plasticizers>>

The (b) plasticizer contained in the vinyl chloride resin composition may optionally further include plasticizers ((b2) other plasticizers) other than the (b1) polyester described above.

The content of the (b2) other plasticizers in the vinyl chloride resin composition can be 0 parts by mass or more, and is preferably 0.5 parts by mass or more, more preferably 1 part by mass or more, even more preferably 1.5 parts by mass or more, and further preferably 2 parts by mass or more relative to 100 parts by mass of the (a) vinyl chloride resin. Moreover, the content of the (b2) other plasticizers in the vinyl chloride resin composition can be 40 parts by mass or less, and is more preferably 35 parts by mass or less, even more preferably 20 parts by mass or less, further preferably 10 parts by mass or less, even further preferably 7 parts by mass or less, and particularly preferably 5 parts by mass or less relative to 100 parts by mass of the (a) vinyl chloride resin. When the content of the (b2) other plasticizers in the vinyl chloride resin composition is not less than any of the lower limits set forth above, flexibility of a formed vinyl chloride resin molded product can be further increased. On the other hand, when the content of the (b2) other plasticizers in the vinyl chloride resin composition is not more than any of the upper limits set forth above, powder fluidity of the vinyl chloride resin composition can be improved.

Note that the content of the (b2) other plasticizers in the vinyl chloride resin composition may be 12 parts by mass or more, may be 22 parts by mass or more, or may be 30 parts by mass or more relative to 100 parts by mass of the (a) vinyl chloride resin.

The proportional content of the (b2) other plasticizers in the (b) plasticizer can be 0 mass% or more, is preferably 1 mass% or more, more preferably 2 mass% or more, even more preferably 3 mass% or more, and further preferably 4.2 mass% or more, and is preferably 50 mass% or less, more preferably 35 mass% or less, even more preferably 10 mass% or less, further preferably 7 mass% or less, and even further preferably 5 mass% or less. When the proportional content of the (b2) other plasticizers in the (b) plasticizer is not less than any of the lower limits set forth above, flexibility of a formed vinyl chloride resin molded product can be further increased. On the other hand, when the proportional content of the (b2) other plasticizers in the (b) plasticizer is not more than any of the upper limits set forth above, powder fluidity of the vinyl chloride resin composition can be improved.

Note that the proportional content of the (b2) other plasticizers in the (b) plasticizer may be 15 mass% or more, may be 25 mass% or more, or may be 30 mass% or more.

Examples of the (b2) other plasticizers include plasticizers other than the (b1) polyester described above from among plasticizers that are described in WO2016/098344A1.

More specifically, a trimellitic acid ester and epoxidized vegetable oil can be used as the (b2) other plasticizers.

### [Trimellitic acid ester]

The trimellitic acid ester is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable, and a linear aliphatic alcohol having a carbon number of 6 to 18 is more preferable as the monohydric alcohol.

In particular, the trimellitic acid ester is preferably a triester compound in which substantially all the carboxy groups of trimellitic acid are esterified with the monohydric alcohol described above. Alcohol residue portions of the triester compound may all be derived from the same alcohol or may each be derived from a different alcohol.

The trimellitic acid ester may be composed of a single compound or may be a mixture of different compounds.

Specific examples of suitable trimellitic acid esters include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trimellitic acid trialkyl esters (esters including two or more types of alkyl groups having different carbon numbers (with a proviso that the carbon number is 6 to 18) in a molecule), trimellitic acid tri-n-alkyl esters (esters including two or more types of alkyl groups having different carbon numbers (with a proviso that the carbon number is 6 to 18) in a molecule), and mixtures thereof.

Specific examples of more preferable trimellitic acid esters include tri-n-octyl trimellitate, tri(2-ethylhexyl) trimellitate, tri-n-nonyl trimellitate, tri-n-decyl trimellitate, trimellitic acid tri-n-alkyl esters (esters including two or more types of alkyl groups having different carbon numbers (with a proviso that the carbon number is 6 to 18) in a molecule), and mixtures thereof.

The content of the trimellitic acid ester in the vinyl chloride resin composition may be 0 parts by mass or more, may be 10 parts by mass or more, may be 20 parts by mass or more, may be 33 parts by mass or less, may be 30 parts by mass or less, or may be 28 parts by mass or less relative to 100 parts by mass of the (a) vinyl chloride resin.

Note that the content of the trimellitic acid ester in the vinyl chloride resin composition can be set as 20 parts by mass or less, can be set as 10 parts by mass or less, or can be set as 0 parts by mass relative to 100 parts by mass of the (a) vinyl chloride resin. In other words, it may be the case that the vinyl chloride resin composition does not contain a trimellitic acid ester.

The proportional content of the trimellitic acid ester in the (b) plasticizer may be 0 mass% or more, may be 10 mass% or more, may be 20 mass% or more, may be 40 mass% or less, or may be 30 mass% or less.

Moreover, the proportional content of the trimellitic acid ester in the (b) plasticizer can be set as 20 mass% or less, can be set as 10 mass% or less, and can be set as 0 mass%. In other words, it may be the case that the (b) plasticizer does not include a trimellitic acid ester.

### [Epoxidized vegetable oil]

Epoxidized soybean oil, epoxidized linseed oil, or the like, for example, can be used as the epoxidized vegetable oil. Of these examples, epoxidized soybean oil is preferably used as the epoxidized vegetable oil from a viewpoint of improving tensile characteristics at low temperature of a formed vinyl chloride resin molded product.

The content of the epoxidized vegetable oil in the vinyl chloride resin composition is preferably not less than 2 parts by mass and not more than 7 parts by mass relative to 100 parts by mass of the (a) vinyl chloride resin. When the content of the epoxidized vegetable oil in the vinyl chloride resin composition is within the specific range set forth above, tensile characteristics at low temperature of a formed vinyl chloride resin molded product can be improved.

The proportional content of the epoxidized vegetable oil in the (b) plasticizer can be 0 mass% or more, is preferably 1 mass% or more, more preferably 2 mass% or more, even more preferably 3 mass% or more, and further preferably 4.2 mass% or more, and is preferably 10 mass% or less, more preferably 7 mass% or less, and even more preferably 5 mass% or less. When the content of the epoxidized vegetable oil in the (b) plasticizer is within any of the specific ranges set forth above, tensile characteristics at low temperature of a formed vinyl chloride resin molded product can be improved.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts of these additives can also be the same as described therein.

### <Production method of vinyl chloride resin composition>

The presently disclosed vinyl chloride resin composition can be produced by mixing the components described above.

The mixing method of the (a) vinyl chloride resin, the (b) plasticizer including the (b 1) polyester described above, and various additives that are further compounded as necessary may be a method in which components other than a dusting agent (inclusive of vinyl chloride resin fine particles) are mixed by dry blending and then the dusting agent is subsequently added and mixed, for example, but is not specifically limited thereto. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition>

The obtained vinyl chloride resin composition can be suitably used in powder molding, and more suitably used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, it is normally the case that the presently disclosed vinyl chloride resin molded product contains at least the (a) vinyl chloride resin and the (b) plasticizer, that the content of the (b) plasticizer is more than a specific value, and that the (b) plasticizer includes the (b 1) polyester described above. Moreover, the presently disclosed vinyl chloride resin molded product has excellent surface smoothness as a result of being formed using the presently disclosed vinyl chloride resin composition having excellent meltability.

Therefore, the presently disclosed vinyl chloride resin molded product can suitably be used as an automobile interior material such as a surface skin of an automobile instrument panel.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

As a result of the presently disclosed laminate including a vinyl chloride resin molded product that is formed using the presently disclosed vinyl chloride resin composition and that has excellent surface smoothness, the presently disclosed laminate can suitably be used as an automobile interior material forming an automobile interior component (particularly an automobile instrument panel).

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, the powder fluidity and meltability of a vinyl chloride resin composition and the light resistance of a vinyl chloride resin molded product (vinyl chloride resin molded sheet) were measured and evaluated by the following methods.

### <Normal temperature powder fluidity>

A vinyl chloride resin composition obtained in each example or comparative example was used to measure the bulk density from the weight thereof in a 100 mL vessel using a bulk specific gravity measurement apparatus described in JIS-K-6720. The powder of the vinyl chloride resin composition loaded into the 100 mL vessel that was obtained during the above was returned to the bulk specific gravity measurement apparatus, and the time taken for all of the powder to flow when a damper was opened soon thereafter was measured to determine the number of seconds to fall. Note that an evaluation of "does not flow" was given in a case in which flow of the powder was not complete even after 1 minute of waiting. Moreover, the operations described above were each performed at normal temperature (23°C). Furthermore, a smaller number of seconds to fall indicates that the vinyl chloride resin composition has better powder fluidity.

### <Meltability>

The melting temperature of a vinyl chloride resin composition obtained in each example or comparative example was measured using a heated mold. Specifically, a gradation-heated mold was obtained by placing the mold on a heating plate that was gradation heated at equal intervals in a range of from 170°C to 270°C. The vinyl chloride resin composition was sprinkled onto the gradation-heated mold such as to have a thickness of 1 mm and was left for 30 seconds to cause melting thereof. Next, excess vinyl chloride resin composition was shaken off, and the mold was cooled by water. A vinyl chloride resin molded sheet resulting from the vinyl chloride resin being molded in a belt shape in this manner was then removed from the mold. The surface of the vinyl chloride resin molded sheet removed from the mold was visually inspected, and the temperature of a melted location was taken to be the melting temperature. Note that the melted location was judged to be a location where the vinyl chloride resin molded sheet obtained through molding had a smooth surface without a particulate shape remaining. A lower melting temperature indicates that the vinyl chloride resin composition has better meltability.

### <Light resistance>

A laminate including a vinyl chloride resin molded sheet lined with a foamed polyurethane molded product (thickness: 9 mm; density: 0.18 g/cm³) that was obtained in each example or comparative example was cut to dimensions of 7 cm × 14 cm to obtain a test specimen. A Super Xenon Weather Meter (SX75 produced by Suga Test Instruments Co., Ltd.) was used to subject the test specimen to an irradiation test up to a cumulative irradiation dose of 150 MJ with an irradiation intensity of 150 W/m² under a condition of a black panel temperature of 83°C. The change (Δgloss) of a gloss value of the surface of the vinyl chloride resin molded sheet of the test specimen between before and after the irradiation test was determined, and light resistance was evaluated. Note that the gloss value was measured as the 60° reflectance using a gloss meter (GP-60 produced by Tokyo Denshoku Co., Ltd.), and that the gloss value before the irradiation test was subtracted from the gloss value after the irradiation test so as to determine the change (Δgloss). Also note that a smaller value for Δgloss indicates that the vinyl chloride resin molded sheet (vinyl chloride resin molded product) has better light resistance.

### (Production examples)

Polyesters used in the examples and comparative examples were produced as follows.

### <Polyester A>

Adipic acid as a polybasic carboxylic acid, 3-methyl-1,5-pentanediol as a polyhydric alcohol, and 2-ethylhexanol as a stopper (terminal stopping component) were charged to a reactor, tetraisopropyl titanate was added as a catalyst, solvent was added as appropriate, and heating thereof was performed under stirring. Water produced as a by-product was removed at normal pressure and at reduced pressure, and the temperature was finally raised to 220°C to 230°C to complete a dehydration condensation reaction and yield a polyester A (viscosity: 3,200 mPa·s; weight-average molecular weight: 5,800; acid value: 0.32 mg KOH/g; hydroxyl value: 12.7 mg KOH/g) including 2-ethylhexoxy groups at the terminals thereof.

### <Polyester B>

A polyester B (viscosity: 2,800 mPa·s; weight-average molecular weight: 4,200; acid value: 1.0 mg KOH/g; hydroxyl value: 5.5 mg KOH/g) including 2-ethylhexoxy groups at the terminals thereof was obtained in the same way as in production of the polyester A with the exception that 2-methyl-1,3-propanediol (hereinafter, also referred to as "2MPD") was used instead of 3-methyl-1,5-pentanediol as a polyhydric alcohol.

### <Polyester C>

A polyester C (viscosity: 2,800 mPa·s; weight-average molecular weight: 3,600; acid value: 1.0 mg KOH/g; hydroxyl value: 8.0 mg KOH/g) including 2-ethylhexoxy groups at the terminals thereof was obtained in the same way as in production of the polyester A with the exception that a polyhydric alcohol mixture containing 50 mol% of 2-methyl-1,3-propanediol and 50 mol% of 2,2-dimethyl-1,3-propanediol was used instead of 3-methyl-1,5-pentanediol as a polyhydric alcohol.

### (Example 1)

### <Production of vinyl chloride resin composition>

With the exception of plasticizers (trimellitic acid ester, polyester B, and epoxidized soybean oil) and vinyl chloride resin fine particles used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as the dusting agent were added to the mixture to produce a vinyl chloride resin composition.

The obtained vinyl chloride resin composition was used to evaluate powder fluidity and meltability. The results are shown in Table 1.

### <Formation of vinyl chloride resin molded product>

A vinyl chloride resin molded sheet having dimensions of 145 mm × 175 mm × 1 mm was produced as follows.

Specifically, the vinyl chloride resin composition obtained as described above was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet was removed from the mold as a vinyl chloride resin molded product.

### <Formation of laminate>

Two obtained vinyl chloride resin molded sheets (dimensions: 145 mm × 175 mm × 1 mm) were arranged inside of a 200 mm × 300 mm × 10 mm mold with the textured surface facing downward.

Separately thereto, a polyol mixture containing 50 parts by mass of a propylene oxide/ethylene oxide (PO/EO) block adduct of propylene glycol (hydroxyl value: 28 mg KOH/g; terminal EO unit content: 10%; internal EO unit content: 4%), 50 parts by mass of a PO/EO block adduct of glycerin (hydroxyl value: 21 mg KOH/g; terminal EO unit content: 14%), 2.5 parts by mass of water, 0.2 parts by mass of an ethylene glycol solution of triethylenediamine (produced by Tosoh Corporation; product name: TEDA-L33), 1.2 parts by mass of triethanolamine, 0.5 parts by mass of triethylamine, and 0.5 parts by mass of a foam stabilizer (produced by Shin-Etsu Chemical Co., Ltd.; product name: F-122) was mixed with polymethylene polyphenylene polyisocyanate (polymeric MDI) in a ratio determined to give an index of 98 so as to prepare a mixed liquid. The prepared mixed liquid was poured onto the vinyl chloride resin molded sheets that had been placed in the mold as described above. Thereafter, the mold was covered by a 348 mm × 255 mm × 10 mm aluminum plate to seal the mold. The mold was left for 5 minutes after sealing thereof so as to form a laminate in which a vinyl chloride resin molded sheet (thickness: 1 mm) serving as a surface skin was lined with a foamed polyurethane molded product (thickness: 9 mm; density: 0.18 g/cm³).

The formed laminate was removed from the mold, and light resistance was evaluated for the vinyl chloride resin molded sheet in the laminate. The result is shown in Table 1.

### (Examples 2 to 7 and Comparative Examples 1A, 1B, 2A, 2B, and 3 to 6)

A vinyl chloride resin composition, a vinyl chloride resin molded product, and a laminate were produced in the same way as in Example 1 with the exception that the formulation was changed as indicated in Table 1. Measurements and evaluations were made in the same manner as in Example 1. The results are shown in Table 1.

Note that "N/A" in Table 1 indicates "not measured".

**[Table 1]**

| | | | | Comparative Example 1A | Comparative Example 1B | Example 1 | Comparative Example 2A | Comparative Example 2B | Example 2 | Comparative Example 3 | Example 3 | Comparative Example 4 | Example 4 | Comparative Example 5 | Example 5 | Comparative Example 6 | Example 6 | Example 7 |
|---|---|---|---|---|---|---|---|---|---|---|---|---|---|---|---|---|---|---|
| | Vinyl chloride resin | Varyl chloride resin particles⁽¹⁾ [parts by mass] | | 100 | 100 | 100 | 100 | 100 | 100 | 100 | 100 | 100 | 100 | 100 | 100 | - | - | 100 |
| | | Varyl chloride resin particles⁽²⁾ [parts by mass] | | - | - | - | - | - | - | - | - | - | - | - | - | 100 | 100 | - |
| | | Vinyl chloride resin fine particles⁽³⁾ [parts by mass] | | 16 | 16 | 16 | 16 | 16 | 16 | 16 | 16 | 16 | 16 | 16 | 16 | 16 | 16 | 16 |
| | Plasticizer | Polyester | Polyester A [parts by mass] | 80 | - | - | 110 | - | - | 120 | - | 90 | - | 100 | - | 100 | - | - |
| | | | Polyester B [parts by mass] | - | - | 80 | - | - | 110 | - | 120 | - | 90 | - | 100 | - | 100 | 130 |
| | | | Polyester C [parts by mass] | - | 80 | - | - | 110 | - | - | - | - | - | - | - | - | - | - |
| | | Other plasticizers | Trimellitic acid ester⁽⁴⁾ [parts by mass] | 30 | 30 | 30 | - | - | - | - | - | - | - | - | - | - | - | - |
| Formulation | | | Epoxidized soybean oil⁽⁵⁾ [parts by mass] | 5 | 5 | 5 | 5 | 5 | 5 | 5 | 5 | 5 | 5 | 5 | 5 | 5 | 5 | 5 |
| | Stabilizer | Perchloric acid-substituted hydrotalcite⁽⁶⁾ [parts by mass] | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Zeolite⁽⁷⁾ [parts by mass] | | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | | Stearoylbenzoylmethane (β-diketone)⁽⁸⁾ [parts by mass] | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | Zinc stearate⁽⁹⁾ [parts by mass] | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Mold release agent | 12-Hydroxystearic acid⁽¹⁰⁾ [parts by mass] | | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | Pigment | Black⁽¹¹⁾ [parts by mass] | | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |
| Content relative to 100 parts by mass of vinyl chloride resin | | Polyester [parts by mass] | | 69.0 | 69.0 | 69.0 | 94.8 | 94.8 | 94.8 | 103.4 | 103.4 | 77.6 | 77.6 | 86.2 | 86.2 | 86.2 | 86.2 | 112.1 |
| | | Trimellitic acid ester [parts by mass] | | 25.9 | 25.9 | 25.9 | - | - | - | - | - | - | - | - | - | - | - | - |
| | | Epoxidized soybean oil [parts by mass] | | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 |
| | | Total of plasticizers other than polyester [parts by mass] | | 30.2 | 30.2 | 30.2 | 4.3 | 4.3 | 4.3 | 4.3 | 4.3 | 4.3 | 4.3 | 4.3 | 4.3 | 4.3 | 4.3 | 4.3 |
| | | Total of plasticizers [parts by mass] | | 99.1 | 99.1 | 99.1 | 99.1 | 99.1 | 99.1 | 107.8 | 107.8 | 81.9 | 81.9 | 90.5 | 90.5 | 90.5 | 90.5 | 116.4 |
| Composition of plasticizer | | Polyester [mass%] | | 69.6 | 69.6 | 69.6 | 95.7 | 95.7 | 95.7 | 96.0 | 96.0 | 94.7 | 94.7 | 95.2 | 95.2 | 95.2 | 95.2 | 96.3 |
| | | Trimellitic acid ester [mass%] | | 26.1 | 26.1 | 26.1 | - | - | - | - | - | - | - | - | - | - | - | - |
| | | Epoxidized soybean oil [mass%] | | 4.3 | 4.3 | 4.3 | 4.3 | 4.3 | 4.3 | 4.0 | 4.0 | 5.3 | 5.3 | 4.8 | 4.8 | 4.8 | 4.8 | 3.7 |
| | | Total of plasticizers other than polyester [mass%] | | 30.4 | 30.4 | 30.4 | 4.3 | 4.3 | 4.3 | 4.0 | 4.0 | 5.3 | 5.3 | 4.8 | 4.8 | 4.8 | 4.8 | 3.7 |
| Composition of polyhydric alcohol-derived structural units included in polyester | | 2-Methyl-1,3-propanediol-derived structural units [mol%] | | - | 50 | 100 | - | 50 | 100 | - | 100 | - | 100 | - | 100 | - | 100 | 100 |
| | | 2,2-Danethyl-1,3-propanediol-derived structural units [mol%] | | - | 50 | - | - | 50 | - | - | - | - | - | - | - | - | - | - |
| | | 3-Methyl-1,5-pertanediol-derived structural units [mol%] | | 100 | - | - | 100 | - | - | 100 | - | 100 | - | 100 | - | 100 | - | - |
| Evaluation | Powder fluidity | Number of seconds to fall [s] | | 14.0 | 12.9 | 13.8 | 14.1 | 12.7 | 13.4 | 13.0 | 12.7 | 14.6 | 13.3 | 14.0 | 13.1 | 13.9 | 12.7 | 12.7 |
| | Meltability | Melting temperature [°C] | | 223 | 225 | 222 | 231 | 225 | 223 | 218 | 214 | 234 | 227 | 225 | 224 | 213 | 212 | 212 |
| | Light resistance | Gloss value | Before irradiation test | 1.2 | 1.1 | 1.3 | 1.2 | 1.0 | 1.3 | 1.2 | 1.2 | N/A | N/A | N/A | N/A | N/A | N/A | 1.1 |
| | | | After irradiation test | 4.5 | 3.1 | 4.1 | 4.9 | 3.8 | 4.1 | 3.7 | 3.8 | N/A | N/A | N/A | N/A | N/A | N/A | 3.7 |
| | | ΔGloss | | 3.3 | 2.1 | 2.8 | 3.7 | 2.7 | 2.8 | 2.5 | 2.6 | N/A | N/A | N/A | N/A | N/A | N/A | 2.6 |

| | | | | | | | | | | | | | | | | | | |
|---|---|---|---|---|---|---|---|---|---|---|---|---|---|---|---|---|---|---|
| (1) Product name: ZEST^{®} (ZEST is a registered trademark in Japan, other countries, or both) 1700ZI (produced by suspension polymerization; average degree of polymerization: 1,700; average particle diameter: 129 µm); produced by Shin Dai-ichi Vinyl Corporation (2) Product name: ZEST^{®} 1300SI (produced by suspension polymerization; average degree of polymerization: 1,300; average particle diameter: 132 µm); produced by Shin Dai-ichi Vinyl Corporation (3) Product name: ZEST PQLTX (produced by emulsion polymerization; average degree of polymerization: 800; average particle diameter: 1.8 µm); produced by Shin Dai-ichi Vinyl Corporation (4) Product name: TRIMEX N-08; produced by Kao Corporation (5) Product name: ADK CIZER 0-130S; produced by Adeka Corporation (6) Product name: ALCAMIZER^{®} 5 (ALCAMIZER is a registered trademark in Japan, other countries, or both); produced by Kyowa Chemical Industry Co., Ltd. (7) Product name: MIZUKALIZER DS; produced by Mizusawa Industrial Chemicals, Ltd. (8) Product name: Karenz DK-1; produced by Showa Denko K.K. (9) Product name: SAKAI SZ2000; produced by Sakai Chemical Industry Co., Ltd. (10) Product name: ADK STAB LS-12; produced by Adeka Corporation (11) Product name: DA P 4720 Black; produced by Dainichiseika Color and Chemicals Mfg. Co., Ltd. | | | | | | | | | | | | | | | | | | |

It can be seen from Table 1 that meltability is excellent for the vinyl chloride resin compositions of Examples 1 to 7, which each have a plasticizer content that is more than a specific value, contain a polyester including adipic acid-derived structural units and polyhydric alcohol-derived structural units as a plasticizer, and have a proportional content of 2-methyl-1,3-propanediol-derived structural units among the polyhydric alcohol-derived structural units that is more than a specific value.

In contrast, it can be seen that compared to the vinyl chloride resin composition of Example 1, meltability is poor for the vinyl chloride resin compositions of Comparative Examples 1A and 1B, which each have the same formulation as the vinyl chloride resin composition of Example 1 with the exception that the used polyester includes adipic acid-derived structural units and polyhydric alcohol-derived structural units but has a proportional content of 2-methyl-1,3-propanediol-derived structural units among the polyhydric alcohol-derived structural units that is not more than a specific value.

It can also be seen that compared to the vinyl chloride resin composition of Example 2, meltability is poor for the vinyl chloride resin compositions of Comparative Examples 2A and 2B, which each have the same formulation as the vinyl chloride resin composition of Example 2 with the exception that the used polyester includes adipic acid-derived structural units and polyhydric alcohol-derived structural units but has a proportional content of 2-methyl-1,3-propanediol-derived structural units among the polyhydric alcohol-derived structural units that is less than a specific value.

The same is seen upon comparison of Comparative Example 3 with Example 3, Comparative Example 4 with Example 4, Comparative Example 5 with Example 5, and Comparative Example 6 with Example 6.

### INDUSTRIAL APPLICABILITY

According to the present disclosure, it is possible to provide a vinyl chloride resin composition having excellent meltability.

Moreover, according to the present disclosure, it is possible to provide a vinyl chloride resin molded product formed using this vinyl chloride resin composition.

Furthermore, according to the present disclosure, it is possible to provide a laminate including this vinyl chloride resin molded product.

## Claims

1. A vinyl chloride resin composition comprising a vinyl chloride resin and a plasticizer, wherein
content of the plasticizer is more than 70 parts by mass relative to 100 parts by mass of the vinyl chloride resin,
the plasticizer includes a polyester that includes adipic acid-derived structural units and polyhydric alcohol-derived structural units, and
the polyhydric alcohol-derived structural units include more than 70 mol% of 2-methyl-1,3-propanediol-derived structural units.

2. The vinyl chloride resin composition according to claim 1, wherein content of the polyester is more than 30 parts by mass and not more than 200 parts by mass relative to 100 parts by mass of the vinyl chloride resin.

3. The vinyl chloride resin composition according to claim 1, wherein proportional content of the polyester in the plasticizer is 50 mass% or more.

4. The vinyl chloride resin composition according to claim 1 used in powder molding.

5. The vinyl chloride resin composition according to claim 1 used in powder slush molding.

6. A vinyl chloride resin molded product obtained through molding of the vinyl chloride resin composition according to any one of claims 1 to 5.

7. The vinyl chloride resin molded product according to claim 6 for a surface skin of an automobile instrument panel.

8. A laminate comprising: a foamed polyurethane molded product; and the vinyl chloride resin molded product according to claim 6.

9. The laminate according to claim 8 for an automobile instrument panel.
